# EUROPEAN PATENT APPLICATION

(11) **EP 1 617 119 A1**
(43) Date of publication of application: **18.01.2006**
(21) Application number: 05380096.7
(22) Date of filing: 13.05.2005
(51) Int. Cl.: F16K 35/02, F16K 11/074

(54) **A distributor for liquids**

(30) Priority: 14.07.2004 ES 200401708 U
(71) Applicant: Valvules i Racords Canovelles, S.A., 08150 Partes del Valles (Barcelona) (ES)
(72) Inventor: Ibanez Sapina, Miguel, Valvules i R. Canovelles SA, 08150 Parets del Valles (Barcelona) (ES)
(74) Representative: Pastells Teixido, Manuel

(57) **Abstract**

This distributor for liquids comprises a compartmented body (1) having several outlets (2), a cover (3) being fixed onto said body, a rotatable obturator bell (5) being interposed between said body and said cover, said obturator bell being governed by a control (15) being arranged outside the cover. This distributor is characterised in that the compartmented body is laterally provided with an inlet (4) for the liquid, said inlet leading into a peripheral compartment (8) upperly communicating with the chamber (9) being formed between the compartmented body and the cover, the obturator bell being arranged in said chamber. The cover has a flattened makeup and is fitted to a peripheral, enlarged portion being upperly provided in the compartmented body.

## Description

### FIELD OF THE INVENTION

This distributor for liquids is preferentially applicable for being fitted to the filters being used to clean the swimming pool water.

### BACKGROUND OF THE INVENTION

There are different models of distributors for liquids, said distributors generally comprising a compartmented, cylindrical body having several outlets, a cover making up a receptacle and having the water inlet being removably fixed onto said body, a rotatable obturator bell being innerly interposed between the body and the cover, said obturator bell being governed by an external control.

### SUMMARY OF THE INVENTION

This invention has as its object a distributor for liquids of the aforementioned type being characterised in that it has a simplified and compact makeup substantially reducing the cost and requiring less space for its storage, all this to no detriment of its operation, its performances equalling those of the distributors for liquids having a more complex and bulky makeup.

In order to achieve said improvements this distributor for liquids is characterised in that the water inlet has been provided in a lateral arrangement in the compartmented body itself, so that the cover can have a flattened shape and forms between itself and said body the chamber where the obturator bell is arranged.

The aforementioned water inlet leads into a peripheral compartment of the compartmented body, said compartment upperly communicating with said chamber wherefrom the water is distributed by the obturator bell towards one of the outlets.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:

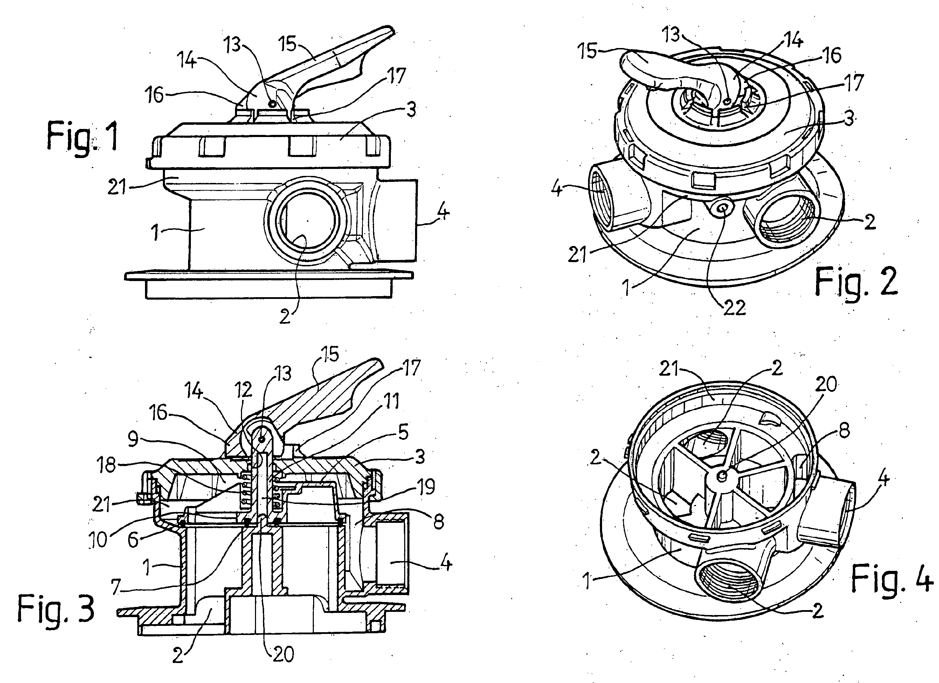

Figs. 1 and 2 respectively illustrate in an elevational and a perspective view the distributor for liquids being the object of the invention;
Fig. 3 shows this distributor for liquids as seen in a sectional elevation; and
Fig. 4 represents in a perspective view the compartmented body of this distributor for liquids.

### DETAILED DESCRIPTION

According to the drawings this distributor for liquids comprises a body (1) being radially compartmented in its inside and having several outlets (2), a cover (3) being removably fixed onto said body, this latter having a lateral inlet (4) for the liquid. Between the body (1) and the cover (3) an obturator bell (5) is arranged and by means of O-ring seals (6) and (7) rest on said body (1) .

The inlet (4) leads into a peripheral compartment (8) upperly communicating with the chamber (9) being formed between the body (1) and the cover (3) on and around the bell (5).

The compartmented inner space of the body (1) makes up the chamber distributing the liquid towards one or another of the outlets (2), the liquid flowing into one of the compartments through an opening (10) of the bell (5) .

The bell (5) forms a centrally located, vertical shaft (11) upperly projecting through the central orifice (12) of the cover (3) and being linked in a pin-jointed connection by means of the pin (13) to the forward end (14) of the control (15).

The control (15) is apt to selectively fit by means of a forward appendage (16) into one of the radial slots (17) of the cover (3) in order to thus stabilise the position having been chosen for the control.

The bell (5) is always biased against the body (1) by means of a helical spring (18) being fitted around the shaft (11), and in its vertical motion the bell is guided by the axial hollow (19) of the shaft (11) on a projection (20) of the centre of the body (1) (Fig. 4).

In the represented case the cover (3) is fitted to the body (1) in a bayonet coupling arrangement at an upperly peripheral, enlarged portion (21) of said body, it being nevertheless foreseen that said cover can also be fitted by means of screws.

The body (1) is laterally provided with a passage (22) allowing to fit a manometer.

## Claims

1. A distributor for liquids comprising a compartmented body (1) having several outlets (2), a cover (3) being fixed onto said body, a rotatable obturator bell (5) being interposed between said body and said cover, said obturator bell being governed by a control (15) being arranged outside the cover (3); **characterised in that** the compartmented body (1) is laterally provided with an inlet (4) for the liquid, said inlet leading into a peripheral compartment (8) upperly communicating with the chamber (9) being formed between the compartmented body (1) and the cover (3), the obturator bell (5) being arranged in said chamber.

2. A distributor for liquids as per claim 1, **characterised in that** the compartmented body (1) is upperly provided with a peripheral, enlarged portion (21), the cover (3) having a flattened makeup being fitted to this latter.
